# EUROPÄISCHE PATENTANMELDUNG

(11) **EP 0 554 775 A2**
(43) Veröffentlichungstag der Anmeldung: **11.08.1993**
(21) Anmeldenummer: 93101194.4
(22) Anmeldetag: 27.01.1993
(51) Int. Cl.: D02J 1/22, D06C 3/00, E04C 5/07, B29C 67/14, C08J 5/04

(54) **Nachverstreckte Garne, Zwirne oder Gewebe auf der Basis von Stapelfasern, Verfahren zu deren Herstellung und daraus hergestellte Verbundwerkstoffe**

(30) Priorität: 01.02.1992 DE 4202954
(71) Anmelder: HOECHST AKTIENGESELLSCHAFT, D-65926 Frankfurt am Main (DE)
(72) Erfinder: Born, Hans, W-8420 Kelheim-Weltenburg (DE)

(57) **Zusammenfassung**

Beschrieben werden Garne, Zwirne auf der Basis von Stapelfasern aus synthetischen Polymeren oder Gewebe daraus, die eine gegenüber den unverstreckten Ausgangsmaterialien einen um mindestens 200 % erhöhten Anfangsmodul, bezogen auf 100 % Dehnung, aufweisen wobei im Falle der Gewebe diese Forderung in Kett- und Schußrichtung gilt. Diese Garne, Zwirne oder Gewebe lassen sich als Verstärkungsmaterialien für spröde Matrixmaterialien einsetzen und werden durch Nachverstreckung von Stapelfasergarnen bzw. Zwirnen aus solchen Garnen bzw. Geweben aus solchen Garnen oder Zwirnen hergestellt. Sie zeichnen sich durch eine geringe Reißdehnung und durch eine erhöhte Reißfestigkeit aus.

## Beschreibung

Die vorliegende Erfindung betrifft Garne, Zwirne oder Gewebe auf der Basis von Stapelfasern mit erhöhter Steilheit der Kraft-Dehnungs Charakteristik, ein Verfahren zu deren Herstellung sowie die durch besagte Garne, Zwirne oder Gewebe verstärkten Verbundwerkstoffe.

Verbundwerkstoffe auf der Basis von spröden Matrixmaterialien, wie mineralischen Baumaterialien, und Verstärkungsfasern sind an sich bekannt. So wird z.B. in Melliand 66, S. 430-2, der Einsatz von hochfesten Polyacrylnitril-Fasern auf verschiedensten technischen Gebieten, so auch in der Betonverstärkung, vorgeschlagen.

In der EP-A-44,534 wird die Herstellung von hochfesten Polyacrylnitril-Fasern beschrieben und deren Einsatz als Verstärkungsmaterial vorgeschlagen. Es wird dort auch der Einsatz von Stapelfasergarnen erwähnt. Eine spezielle Nachbehandlung von Stapelfasergarnen wird nicht vorgeschlagen.

In der EP-A-223,291 wird die Herstellung von faserverstärktem Beton beschrieben. Als Verstärkungsmaterial werden niedrig oder gar nicht gedrehte Endlosfilamente vorgeschlagen, die unter anderem auch aus Polyacrylnitril bestehen können.

Aus der EP-A-224,430 ist eine spezielle Herstellungsweise hochfester Gewebe auf der Basis von Reifencorden bekannt, wonach die Filamentgarne nicht wie bisher vollständig, sondern nur teilweise verstreckt werden und die restliche Verstreckung nach der Herstellung von Geweben erfolgt. Mit diesem Verfahren sollen häufige Filamentschäden bei der bisherigen Vollverstreckung der Filamente vermieden werden. Stapelfasergarne werden nicht erwähnt.

Ferner sind in der DE-A-2,037,685 Verfahren zur Behandlung von Stapelfasergarnen auf Polyesterbasis beschrieben, wodurch eine Erhöhung des Moduls und eine Verringerung der Reißdehnung der Garne erzielt werden soll. Dazu werden die Garne so lange unter Spannung erhitzt, bis die gewünschte Verringerung der Bruchdehnung bzw. Erhöhung des Moduls und der Festigkeit erreicht worden sind. Nach der Beschreibung bewirkt die Verfahrensführung ein Verkleben oder Anschmelzen der einzelnen Stapelfasern, wodurch eine Haftungserhöhung erreicht wird. Es werden nur moderate Garnspannungen angelegt und Reißdehnungen von 8 bis 18 % offenbart.

Zur Armierung von spröden Matrixmaterialien, also von Materialien mit einer Bruchdehnung von weniger als etwa 5 %, sowie von anderen Matrices, z.B. Duroplasten, bei denen geringe Dehn- bzw. Biegebereitschaft angestrebt wird, sind vorbekannte Stapelfasergarne weniger gut geeignet.

Aufgabe der vorliegenden Erfindung ist es daher, ein Verstärkungsmaterial bereitzustellen, das sich zum Einsatz in spröden Matrixmaterialien und anderen Matrices mit erwünschter niedriger Dehn- bzw. Biegebereitschaft besonders gut eignet.

Gelöst wird diese Aufgabe durch die Garne oder Zwirne gemäß Anspruch 1 oder durch die Gewebe gemäß Anspruch 2.

Bevorzugte Ausführungsformen der Erfindung sind in den Ansprüchen 3 bis 7 beschrieben.

Die erfindungsgemäßen nachverstreckten Garne, Zwirne und Gewebe zeichnen sich durch eine herabgesetzte Dehnung über den gesamten Lastbereich und gleichzeitig durch eine erhöhte Reißfestigkeit und einen erhöhten E-Modul aus, was sich in einem im Vergleich zum nicht nachverstreckten Material steileren Kraft-Dehnungsverlauf (KD-Verlauf) ausdrückt.

Durch die Nachverstreckung wird üblicherweise eine Erhöhung der Höchstzugkraft um mindestens 200 % gegenüber den entsprechenden unverstreckten Rohgarnen oder -zwirnen oder Geweben erreicht; insbesondere eine Erhöhung um 215 bis 350 %.

Dabei ist die relative Erhöhung der KD-Steilheit um so größer, je näher sie beim Dehnungswert Null liegt.

Infolge der geringen Reißdehnung lassen sich die erfindungsgemäßen nachverstreckten Garne, Zwirne und Gewebe als Verstärkungsmaterialien für spröde Matrixmaterialien und Matrices mit angestrebter niedriger Dehn- und Biegebereitschaft einsetzen. Die Lastaufnahme der erfindungsgemäßen Verstärkungsmaterialien kann also schon und vor allem bei geringen Dehnungen erfolgen, lange bevor die Bruchdehnung des spröden Matrixmaterials erreicht wird. Außerdem lassen sich mit den erfindungsgemäßen Garnen, Zwirnen oder Geweben höhere Lastaufnahmen im Vergleich zu nicht nachverstreckten Materialien erzielen.

Als Ausgangsmaterial für die erfindungsgemäßen Garne, Zwirne oder Gewebe lassen sich im Prinzip alle Stapelfasern auf der Basis von synthetischen Polymeren einsetzen. Die Stapelfasergarne können durch alle an sich üblichen Verfahren der Sekundärspinnerei hergestellt werden, beispielsweise durch Dreizylinder-, Halbkammgarn-, Kammgarn-, Streichgarn- oder OE-Spinnverfahren. Es lassen sich auch Garne auf der Basis von Reißkabeln einsetzen. Es können dabei alle für das jeweilige Spinnverfahren hinsichtlich Feinheit und Schnittlänge geeigneten Fasertypen eingesetzt werden.

Auch die Herstellung der als Ausgangsmaterial eingesetzten Zwirne erfolgt nach an sich bekannten Verfahren.

Als synthetische Polymere lassen sich im Prinzip alle faserbildenen Polymeren einsetzen. Vorzugsweise verwendet man Polymere, die sich zur Herstellung hochfester und hochmoduliger Fasern eignen. Bevorzugte Beispiele für solche Polymere sind aromatische Polyamide (Aramide), aromatische Polyester und Polyacrylnitril.

Polyacrylnitrilfasern sind besonders bevorzugt, da diese sich durch eine gute Alkalibeständigkeit auszeichnen und sich insbesondere in alkalischen Matrixmaterialien, wie z.B. in Beton, einsetzen lassen.

Ganz besonders bevorzugt verwendet man Polyacrylnitril-Stapelfasern hoher Festigkeit und hohen Moduls, wie Fasern mit einer Reißfestigkeit bei 25 °C von mindestens 25 cN/tex, insbesondere 30 bis 50 cN/tex und mit einem Anfangsmodul bei 25 °C bezogen auf 100 % Dehnung, von mindestens 300 cN/tex, insbesondere 500 bis 1200 cN/tex.

Die Reißfestigkeiten bei 25°C typischer Polyacrylnitril-Stapelfaserrohgarne betragen 32 bis 35 cN/tex und deren Anfangsmoduli bei 25°C, bezogen auf 100 % Dehnung betragen üblicherweise 450 bis 500 cN/tex.

Zur Herstellung der erfindungsgemäßen Garne oder Zwirne werden die unverstreckten oder teilweise verstreckten Stapelfasergarne oder -zwirne nachverstreckt, wobei die Gesamtverstreckung so zu wählen ist, daß praktisch die bei der jeweiligen Verstrecktemperatur maximal erzielbare Gesamtverstreckung erreicht wird. Dabei ist der Gesamtverstreckungsgrad so zu wählen, daß der gewünschte Anstieg der Steilheit der Kraft-Dehnungskennlinie erreicht wird. Dies wird in der Regel dann der Fall sein, wenn die Zugkraft bei der Verstreckung mindestens 90 % der jeweiligen Höchstzugkraft bei der jeweiligen Verstrecktemperatur beträgt.

Die Garne oder Zwirne können in einer Stufe oder in mehreren Stufen, bevorzugt in zwei oder insbesondere in einer Stufe nachverstreckt werden.

Die Nachverstreckung kann bei Raumtemperatur oder insbesondere bei erhöhter Temperatur erfolgen. Dabei sind die Verstreckbedingungen bei der jeweiligen Temperatur vom Fachmann anhand von an sich bekannten Kriterien, insbesondere Faden- oder Gewebebrüchen, zu ermitteln. So werden beispielsweise der maximal erreichbare Verstreckgrad und die Höchstzugkraft von der Verstrecktemperatur abhängen. Im Falle von Polyacrylnitril-Stapelfasergarnen arbeitet man zweckmäßigerweise bei Verstrecktemperatur von 80 bis 160°C.

Die Nachverstreckung des Garns oder des Zwirns kann mittels an sich üblicher Vorrichtungen erfolgen. So lassen sich beispielsweise Streckwerke einsetzen, bei denen das Garn zwei sich mit unterschiedlicher Geschwindigkeit bewegende Rollen-Systeme durchläuft. Die Nachverstreckung kann aber auch auf Steckzwirnmaschinen oder auf Streckspulmaschinen erfolgen.

Die erhöhte Temperatur bei der Verstreckung kann mittels der dafür bekannten Wärmeüberträger erzeugt werden, beispielsweise durch Durchleiten des Garns durch eine erhitzte Flüssigkeit, wie Wasser, oder durch Anblasen des Garns mit einem erhitzten Gas.

Für den Fall, daß das Garn oder der Zwirn bei erhöhter Temperatur verstreckt werden, sind diese nach jeder Streckbehandlung unter Spannung so weit abzukühlen, daß eine Relaxation des nachverstreckten Garns oder Zwirns nicht mehr auftritt. Dazu reichen Temperaturen von weniger als 30 °C im allgemeinen aus; bei der Verstreckung von Polyacrylnitril-Stapelfasergarnen unter erhöhter Temperatur läßt man diese unter Spannung vorteilhafterweise auf Temperaturen von kleiner gleich 25 °C abkühlen.

Die Nachverstreckung eines Gewebes aus dem Garn oder Zwirn ist so durchzuführen, daß sowohl in Kett- als auch in Schußrichtung eine Verstreckung gleichzeitig erfolgt.

Dazu ist das Gewebe gleichzeitig in Kett- und Schußrichtung in einer Stufe oder in mehreren Stufen zu verstrecken, da bei der Verstreckung in nur einer Richtung gleichzeitige Relaxation in der anderen Richtung eintritt.

Die Gesamtverstreckung ist in jeder Richtung so zu wählen, daß praktisch die bei der jeweiligen Verstrecktemperatur maximal erzielbare Gesamtverstreckung erreicht wird. Dabei ist der Gesamtverstreckgrad so zu wählen, daß der gewünschte Anstieg der Steilheit der Kraft-Dehnungskennlinie des verstreckten Produktes erreicht wird. Dies wird in der Regel dann der Fall sein, wenn die Zugkraft bei der Verstreckung mindestens 90 % der jeweiligen Höchstzugkraft bei der jeweiligen Verstrecktemperatur liegt.

Wie die Garne oder Zwirne können auch die Gewebe in einer Stufe oder in mehreren Stufen, bevorzugt in zwei oder insbesondere in einer Stufe nachverstreckt werden.
Zur Herstellung der Gewebe können unverstreckte oder teilweise nachverstreckte Stapelfasergarne eingesetzt werden.
Die Nachverstreckung kann bei Raumtemperatur oder insbesondere bei erhöhter Temperatur erfolgen. Dabei sind die Verstreckbedingungen bei der jeweiligen Temperatur vom Fachmann wie weiter oben für die Garne und Zwirne beschrieben zu ermitteln.

Die Nachverstreckung des Gewebes kann mittels an sich bekannter Spannrahmen erfolgen, bei denen eine gleichzeitige Verstreckung in Kett- und Schußrichtung möglich ist. Beispielsweise läßt sich ein Spannrahmen der Firma Monforts mit Kettenführung längs und quer zu diesem Zweck verwenden.

Die erhöhte Temperatur bei der Verstreckung kann, wie bei der Nachverstreckung der Garne oder Zwirne beschrieben, mittels der dafür bekannten Wärmeüberträger erzeugt werden.

Für den Fall, daß das Gewebe bei erhöhter Temperatur verstreckt wird, ist dieses nach jeder Streckbehandlung - wie bei der Nachverstreckung des Garns oder des Zwirns beschrieben - unter Spannung so weit abzukühlen, daß eine Relaxation des nachverstreckten Gewebes nicht mehr auftritt.

Die erfindungsgemäßen Garne, Zwirne oder Gewebe lassen sich ganz allgemein zur Verstärkung spröder Matrixmaterialien einsetzen, und für Matrices deren Dehn- oder Biegebereitschaft herabgesetzt werden soll.

Die Erfindung betrifft daher auch Verbundwerkstoffe enthaltend ein Matrixmaterial, das eine Bruchdehnung bei 25 °C von weniger als 5 % aufweist, und als Verstärkungsmaterial ein Garn, Zwirn oder Gewebe, wie weiter oben definiert.

Vorzugsweise handelt es sich dabei um Verbundwerkstoffe, deren Matrixmaterial ein mineralischer Baustoff oder ein duroplastischer Kunststoff ist. Infolge der erhöhten Lastenaufnahme lassen sich durch den Einsatz der erfindungsgemäßen Verstärkungsmaterialien Verbunde mit erhöhter Festigkeit erzeugen, oder die Verbunde lassen sich unter Erhalt der Festigkeit dünnwandiger ausgestalten, bzw. ihre Dehn- oder Biegebereitschaft verringern.

Besonders bevorzugt handelt es sich bei dem erfindungsgemäßen Verbundwerkstoff um einen mineralischen Baustoff, wie Beton, Mörtel oder Putz, der als Verstärkungsmaterial das erfindungsgemäße nachverstreckte Garn, Zwirn oder Gewebe enthält, wobei dieses aus Polyacrylnitril-Stapelfasern besteht, insbesondere aus hochfesten und hochmoduligen Polyacrylnitril-Stapelfasern.

Eine weitere besonders bevorzugte Variante des erfindungsgemäßen Verbundwerkstoffes betrifft eine Kombination enthaltend nachverstreckte Stapelfasergarne auf der Basis von Polyacrylnitril, insbesondere aus hochfesten und hochmoduligen Polyacrylnitril-Stapelfasern, und duroplastischen Kunststoff.

Bei den duroplastischen Kunststoffen, die bevorzugt in den erfindungsgemäßen Verbundwerkstoffen eingesetzt werden, handelt es sich beispielsweise um Alkydharze, Epoxidharze, Polyurethanharze und insbesondere Phenolharze.

Die erfindungsgemäßen nachverstreckten Garne, Zwirne oder Gewebe lassen sich beispielsweise zur Herstellung von dünnwandigen Platten oder Formteilen aus mineralischem Material oder aus Kunststoffen einsetzen, wie z.B. zur Herstellung von Fassadenelementen oder Skiern; sie lassen sich ferner zur Verstärkung von Baustoffen einsetzen, wie z.B. als Putze im Bauwesen; oder zur Herstellung von Beschichtungen aller Art, zur Herstellung von Schleifscheiben oder von Reib- und Kupplungsbelägen.

Besonders bevorzugte erfindungsgemäße Garne, Zwirne oder Gewebe weisen Reißdehnungen bei 25 °C von 0,5 bis 5 % auf.

Die folgenden Beispiele beschreiben die Erfindung ohne diese zu begrenzen.

### Beispiel 1: Herstellung eines Gewebes auf der Basis von nachverstreckten Polyacrylnitril-Stapelfasergarnen

Es wird ein Gittergewebe aus Garnen aus Polyacrylnitril-Stapelfasern hergestellt. Es wird folgende Gewebekonstruktion verwendet:
Stapelfasern: DOLANIT® 15 2,8 dtex/100 mm
Halbkammgarn Nm 10/2, 270/240 T/m
Bindung: Dreher
Kette: 9 Drehschnüre à 4 Zwirne/10 cm
Schuß: 9 Gruppen à 4 Zwirne/10 cm
Gitteröffnungen: ca. 8 x 8 mm
Flächengewicht: ca. 150 g/m²
Das Gewebe wird mit einer Schiebefestausrüstung auf Acrylharzbasis versehen. Zur Erhöhung der Steilheit des KD-Diagramms zwecks erhöhter Lastaufnahme des Gewebes im niedrigen Dehnungsbereich von bis zu 3,5 % werden zwei Behandlungen angewandt:

### 1a: Vorverdehnung des Zwirns

Auf Duowalzen wurde der Zwirn bei 100°C um 8 % gedehnt.

### 1b: Fixierung des Gewebes

Das gemäß den obigen Angaben aus dem nachverstreckten Zwirn hergestellte Gewebe wird durch Behandlung des Gewebes mit einem Spannrahmen in Längs-und Querrichtung fixiert, wobei eine zusätzliche Längsverdehnung von etwa 1 % und eine zusätzliche Querverdehnung von etwa 0,7 % erzielt wird. Das derart nachverstreckte Gewebe besitzt bei 3 % Dehnung folgende Festigkeit:

| Beispiel | Meßrichtung | Festigkeit bei 3 % Dehnung (daN) | Gewebetyp |
|---|---|---|---|
| 1a | Kette | 47 | nachverstreckt, wie oben beschrieben |
| 1b | Schuß | 43 | nachverstreckt, wie oben beschrieben |
| 1c | Kette | 43 | nicht verdehnt (Vergleich) |
| 1d | Schuß | 27 | nicht verdehnt (Vergleich) |

### Beispiel 2: Herstellung von nachverstreckten Zwirnen auf der Basis von Polyacrylnitril-Stapelfasern

Ein Zwirn des Typs Nm 10/2 auf der Basis von Stapelfasern aus DOLANIT®15, 2,8 dtex/100 mm wird über ein Klemmwalzenpaar in ein Walzensextett einlaufen gelassen und dort kalt vorverstreckt. Anschließend wird der Zwirn in eine Heizkammer einer Heißverstreckung unterworfen und über ein Walzenoktett zur Aufspulung gebracht. Es werden folgende Nachverstreckungen erhalten und folgende Eigenschaften der Garne gemessen:

| Beispiel | Temperatur der Heißverstreckung (°C) | Nachverstreckung (%) | Reißfestigkeit (N) | Reißdehnung (%) | Titer des verstreckten Garns (tex) |
|---|---|---|---|---|---|
| 2a | 100 | 8 | 63,9 | 5,5 | 189 |
| 2b | 100 | 10 | 66,1 | 5,5 | 189 |
| 2c | 120 | 10 | 70,6 | 6,2 | 188 |
| 2d | 120 | 12 | 72,5 | 5,9 | 188 |
| 2e | 140 | 14 | 76,5 | 5,8 | 187 |
| 2f | 140 | 16 | 73,0 | 5,5 | 181 |
| 2g | 160 | 16,5 | 68,8 | 6,1 | 178 |

## Patentansprüche

1. Garne oder Zwirne auf der Basis von Stapelfasern aus synthetischen Polymeren, dadurch gekennzeichnet, daß diese Garne oder Zwirne gegenüber den entsprechenden unverstreckten Rohgarnen oder -zwirnen einen um mindestens 200 % erhöhten Anfangsmodul, bezogen auf 100 % Dehnung, aufweisen.

2. Gewebe aus Garnen und Zwirnen auf der Basis von Stapelfasern aus synthetischen Polymeren, dadurch gekennzeichnet, daß diese in Kett- und Schußrichtung gegenüber den entsprechenden unverstreckten Geweben einen um mindestens 200 % erhöhten Anfangsmodul, bezogen auf 100 % Dehnung, aufweisen.

3. Garne, Zwirne oder Gewebe gemäß einem der Ansprüche 1 oder 2, dadurch gekennzeichnet, daß diese Garne oder Zwirne gegenüber den entsprechenden unverstreckten Rohgarnen oder -zwirnen oder daß diese Gewebe in Kett- und Schußrichtung gegenüber den entsprechenden unverstreckten Geweben einen um mindestens 200 % bis 400 % erhöhten Anfangsmodul, bezogen auf 100 % Dehnung, aufweisen.

4. Garne, Zwirne oder Gewebe gemäß einem der Ansprüche 1 oder 2, dadurch gekennzeichnet, daß diese eine Reißdehnung bei 25 °C von weniger als 7 %, vorzugsweise von weniger als 5 % aufweisen.

5. Garne, Zwirne oder Gewebe gemäß einem der Ansprüche 1 oder 2, dadurch gekennzeichnet, daß es sich bei den synthetischen Polymeren um Aramide, aromatische Polyester oder insbesondere um Polyacrylnitril handelt.

6. Garne, Zwirne oder Gewebe gemäß Anspruch 5, dadurch gekennzeichnet, daß es sich bei den Stapelfasern um hochfeste und hochmodulige Polyacrylnitrilfasern handelt, die insbesondere eine Reißfestigkeit bei 25 °C von mindestens 25 cN/tex und einen Anfangsmodul bei 25 °C, bezogen auf 100 % Dehnung von mindestens 300 cN/tex aufweisen.

7. Garne, Zwirne oder Gewebe gemäß Anspruch 6, dadurch gekennzeichnet, daß diese eine Reißfestigkeit bei 25 °C von mindestens 45 cN/tex und einen Anfangsmodul bei 25 °C, bezogen auf 100 % Dehnung, von mindestens 300 cN/tex aufweisen.

8. Verfahren zur Herstellung von Garnen oder Zwirnen geringer Reißdehnung auf der Basis von Stapelfasern aus synthetischen Polymeren, dadurch gekennzeichnet, daß
a) die Garne oder Zwirne in einer Stufe oder in mehreren Stufen bis mindestens 90 % der jeweiligen Höchstzugkraft bei der jeweiligen Verstrecktemperatur verstreckt werden, wobei der Gesamtverstreckgrad so gewählt wird, daß das verstreckte Produkt eine Reißdehnung bei 25 °C von bis zu 7 %, vorzugsweise bis zu 5 %, aufweist und, im Falle der Verstreckung bei erhöhter Temperatur,
b) nach jeder Streckbehandlung das Garn oder der Zwirn unter Spannung auf solche Temperaturen abgekühlt wird, so daß praktisch keine Relaxation des verstreckten Garns oder Zwirns mehr auftritt, insbesondere auf Temperaturen unterhalb von 30°C.

9. Verfahren zur Herstellung von Geweben geringer Reißdehnung aus Garnen oder Zwirnen auf der Basis von Stapelfasern aus synthetischen Polymeren, dadurch gekennzeichnet, daß
a) die Gewebe gleichzeitig in Kett- und Schußrichtung in einer Stufe oder in mehreren Stufen bis mindestens 90 % der jeweiligen Höchstzugkraft bei der jeweiligen Verstrecktemperatur verstreckt werden, wobei der Gesamtverstreckgrad so gewährt wird, daß das verstreckte Produkt eine Reißdehnung bei 25 °C von bis zu 7 %, vorzugsweise bis zu 5 %,aufweist und, im Falle der Verstreckung bei erhöhter Temperatur,
b) nach jeder Streckbehandlung das Gewebe unter Spannung auf solche Temperaturen abgekühlt wird, so daß praktisch keine Relaxation des verstreckten Gewebes mehr auftritt, insbesondere auf Temperaturen unterhalb von 30°C.

10. Verfahren gemäß einem der Ansprüche 8 oder 9, dadurch gekennzeichnet, daß die Verstreckung in zwei Schritten oder insbesondere in einem Schritt durchgeführt wird.

11. Verfahren gemaß Anspruch 10, dadurch gekennzeichnet, daß der Gesamtverstreckgrad so eingestellt wird, daß die Reißdehnung der Garne, Zwirne oder Gewebe bei 25 °C 0,5 bis 5 % beträgt.

12. Verbundwerkstoff enthaltend ein Matrixmaterial und ein Verstärkungsmaterial, dadurch gekennzeichnet, daß das Matrixmaterial eine Bruchdehnung bei 25 °C von weniger als 5 % aufweist und daß das Verstärkungsmaterial ein Garn, Zwirn oder Gewebe gemäß einem der Ansprüche 1 bis 7 ist.

13. Verbundwerkstoff gemäß Anspruch 12, dadurch gekennzeichnet, daß das Matrixmaterial ein mineralischer Baustoff oder ein duroplastischer Kunststoff ist.

14. Verbundwerkstoff gemäß Anspruch 13, dadurch gekennzeichnet, daß der mineralische Baustoff ein Beton, Mörtel oder Putz ist und daß das Verstärkungsmaterial ein Garn, Zwirn oder Gewebe auf der Basis von Polyacrylnitril nach Anspruch 6 ist.
